# EUROPEAN PATENT SPECIFICATION

(11) **EP 0 638 177 B1**
(45) Date of publication and mention of the grant of the patent: **31.10.2001**
(21) Application number: 93910831.2
(22) Date of filing: 28.04.1993
(51) Int. Cl.: G02B 5/18, G02B 26/00, G02B 26/08

(54) **MODULATING A LIGHT BEAM**
MODULATION EINES LICHTSTRAHLS
MODULATION D'UN FAISCEAU LUMINEUX

(30) Priority: 28.04.1992 US 876078
(43) Date of publication of application: 15.02.1995
(73) Proprietor: LELAND STANFORD JUNIOR UNIVERSITY Office of Technology Licensing, Palo Alto, CA 94304 (US)
(72) Inventor: BLOOM, David, M., Portola Valley, CA 95025 (US); SANDEJAS, Francisco, S., A., Menlo Park, CA 94025 (US); SOLGAARD, Olav, San Francisco, California 94122 (US)
(74) Representative: Gahlert, Stefan, Dr.-Ing.
(86) International application number: US9303939
(87) International publication number: WO9322694

(56) References cited:
- US-A- 4 492 435
- US-A- 4 596 992
- US-A- 5 256 869
- OPTICS LETTERS, vol. 17, no. 9, 1 May 1992 pages 688-690, XP 000265233 SOLGAARD O ET AL 'DEFORMABLE GRATING OPTICAL MODULATOR'

## Description

This invention relates to a method and apparatus for modulating a light beam and more particularly to the use of a reflective, deformable diffraction grating for performing such modulation.

Devices which modulate a light beam, e.g. by altering the amplitude, frequency or phase of the light, find a number of applications. An example of such a device is a spatial light modulator (SLM) which is an electronically or optically controlled device which consists of one or two-dimensional reconfigurable patterns of pixel elements, each of which can individually modulate the amplitude, phase or polarization of an optical wavefront.

These devices have been extensively developed, particularly for applications in the areas of optical processing and computing. They can perform a variety of functions such as: analog multiplication and addition, signal conversion (electrical-to-optical, incoherent-to-coherent, amplification, etc.), nonlinear operations and short term storage. Utilizing these functions, SLMs have seen many different applications from display technology to optical signal processing. For example, SLMs have been used as optical correlators (e.g., pattern recognition devices, programmable holograms), optical matrix processors (e.g., matrix multipliers, optical cross-bar switches with broadcast capabilities, optical neural networks, radar beam forming), digital optical architectures (e.g., highly parallel optical computers) and displays.

The requirements for SLM technology depend strongly on the application in mind: for example, a display requires low bandwidth but a high dynamic range while optical computers benefit from high response times but do not require such high dynamic ranges. Generally, systems designers require SLMs with characteristics such as: high resolution, high speed (kHz frame rates), good gray scale, high contrast ratio or modulation depth, optical flatness, VLSI compatible, easy handling capability and low cost. To date, no one SLM design can satisfy all the above requirements. As a result, different types of SLMs have been developed for different applications, often resulting in trade-offs.

Texas Instruments, for instance, has developed a "Deformable Mirror Device (DMD)" that utilizes an electromechanical means of deflecting an optical beam. The mechanical motions needed for the operation of the DMD are relatively large and, as a result, the bandwidths are limited to tens of kilohertz. This device, however, gives good contrast ratios and high-resolution and is, furthermore, compatible with CMOS, and other low power technologies.

Nematic and ferroelectric liquid crystals have also been used as the active layer in several SLMs. Since the electrooptic effect in liquid crystals is based on the mechanical reorientation of molecular dipoles, it is to be expected that liquid crystals are faster than the DMD-type devices. Modulators using ferroelectric liquid crystals have exhibited moderate switching speeds (150 *µ*sec to 100 nsec), low-power consumption, VLSI compatible switching voltages (5-10 V), high extinction ratios, high resolution and large apertures. However, these devices suffer from the drawbacks of limited liquid crystal lifetimes and operating temperature ranges. In addition, the manufacturing process is complicated by alignment problems and film thickness uniformity issues.

Magnetooptic modulation schemes have been used to achieve faster switching speeds and to provide an optical pattern memory cell. Although these devices, in addition to achieving fast switching speeds, can achieve large contrast ratios, they suffer from a low (<10%) throughput efficiency and are, therefore, often unsuitable for many applications.

The need is therefore for a light modulation device which overcomes these drawbacks.

Beside SLMs, another area of use of light modulators is in fiber optics. Fiber optic modulators are electronically controlled devices that modulate light intensity and are designed to be compatible with optical fibers. For high speed communication applications, lithium niobate (LiNbO₃) traveling wave modulators represent the state-of-the-art, but there is a need for low power, high efficiency, low loss, inexpensive fiber optic modulators, that can be integrated with silicon sensors and electronics, for data acquisition and medical applications. A typical use of a modulator combined with fiber optic technology, for example, is a data acquisition system on an airplane which consists of a central data processing unit that gathers data from remote sensors. Because of their lightweight and electromagnetic immunity characteristics, fiber optics provide an ideal communication medium between the processor and the sensors which produce an electrical output that must be converted to an optical signal for transmission. The most efficient way to do this is to have a continuous wave laser at the processor and a modulator operating in reflection at the sensor. In this configuration, it is also possible to deliver power to the sensor over the fiber.

In this type of application the modulator should operate with high contrast and low insertion loss to maximize the signal to noise ratio and have low power consumption. It should further be compatible with silicon technology because the sensors and signal conditioning electronics used in these systems are largely implemented in silicon.

Another use of a modulator combined with fiber optic technology is in the monitoring of sensors that are surgically implanted in the human body. Here optical fibers are preferred to electrical cables because of their galvanic isolation, and any modulator used in these applications should exhibit high contrast combined with low insertion loss because of signal to noise considerations. Furthermore, as size is important in implanted devices, the modulator must be integratable with silicon sensors and electronics.

There exist no prior art devices that have the characteristics enumerated above. Modulators based on the electro-optic, Franz-Keldysh, Quantum-Confined-Stark or Wannier-Stark effect in III-V semiconductors have high contrast and low insertion loss, but are expensive and not compatible with silicon devices. Waveguide modulators employing glass or epi-layers on silicon, require too much area and too complex fabrication to be easily integratable with other silicon devices. Silicon modulators that do not employ waveguides and that are based on the plasma effect, require high electrical drive power and do not achieve high contrast.

The need is therefore for a light modulator which can be used with fiber optic technology with low power, high efficiency, low loss, low cost and compatibility with multimode optical fibers and silicon technology.

Further reference is made to US-A-4,596,922 which discloses a linear spatial light modulator with two offset rows of pixels for slight overlap of images. The pixels include electrostatically deflatable elements which all bend in the same direction to permit use of dark field projection. The addressing electrodes for the elements are beneath the reflecting surface and arranged perpendicular to the rows of pixels with half on each side of the rows.

However, this document is not concerned with diffracting an incoming beam of light.

Accordingly, it is an object of this invention to provide a light modulator which alone or together with other modulators exhibits most of the following characteristics: high resolution, high speed (Khz frame rates), gray levels (100 levels), high contrast ratio or modulation depth, optical flatness, VLSI compatible, easy handling capability and low cost.

In addition, it is desired to provide a light modulator which has a tolerance for high optical power and good optical throughput.

Further, it is desired to provide a light modulator which is compatible with CMOS technology.

Also, it is intended to provide a light modulator capable of use with fiber optic technology.

Finally, also a light modulator which is capable of modulating white light to produce colored light shall be provided.

According to the invention, this object is achieved by a modulator according to claim 1, a modulator according to claim 26 and by a method according to claim 22. Further embodiments of the invention are specified in the dependent claims.

Briefly a presently preferred embodiment of this invention includes a modulator for modulating incident beams of light, the modulator comprising a plurality of equally spaced apart grating elements, each of which includes a light reflective planar surface. The elements are arranged parallel to each other with their light reflective surfaces parallel to each other. The modulator includes means for supporting the elements in relation to one another and means for moving the elements in relation to one another so that the elements move between a first configuration wherein the modulator acts to reflect the incident beam of light as a plane mirror, and a second configuration wherein the modulator diffracts the incident beam of light as it is reflected therefrom. In operation, the light reflective surfaces of the elements remain parallel to each other in both the first and the second configurations and the perpendicular spacing between the reflective surfaces of adjacent elements is equal to m/4 times the wavelength of the incident beam of light, wherein m = an even whole number or zero when the elements are in the first configuration and m = an odd number when the elements are in the second configuration.

One embodiment of this invention includes a reflective deformable grating light modulator, with a grating amplitude that can be controlled electronically, consisting of a reflective substrate with a deformable grating suspended above it. In its undeformed state, with no voltage applied between the elements of the grating and the substrate, the grating amplitude is one half of the wavelength of the incoming light. Since the round-trip path difference between the light reflected from the top and bottom of the grating is one wavelength, no diffraction occurs. When a voltage is applied between the grating elements and the substrate, the electrostatic force pulls the elements down to cause the grating amplitude to become one quarter of the wavelength so that reflections from the elements and the substrate add destructively, causing the light to be diffracted. If the detection system for the reflected light has a numerical aperture which accepts only the zero order beam, a mechanical motion of only one quarter of a wavelength is sufficient to modulate the reflected light with high contrast.

Typically the grating is formed by lithographically etching a film made of silicon nitride, aluminum, silicon dioxide or any other material which can be lithographically etched.

The deformable grating modulator of this invention has the advantage that it is implemented in silicon technology, using micromachining and sacrificial etching of thin films to fabricate the gratings. Circuitry for addressing and multiplexing can be manufactured on the same silicon substrate and thus be directly integrated with the modulator. Direct integration with electronics is an important advantage over non-silicon based technologies like liquid crystal and electrooptic SLMs. Moreover, the device demonstrates simplicity of fabrication and can be manufactured with only a few lithographic steps.

A further advantage of the deformable grating modulator is that because the deformable grating modulator utilizes diffraction rather than deflection of a light beam, the required mechanical motions are reduced from several microns (as in deformable mirror devices) to tenths of a micron, thus allowing for a potential three orders of magnitude in increase in speed. This speed is comparable to the fastest liquid crystal modulators, but without the device suffering the same complexity in the manufacturing process.

Still a further advantage of these devices is that the required motion of the grating elements is only one quarter of a wavelength, which means that elements with high resonance frequencies can be used.

These and other objects and advantages of the present invention will no doubt become apparent to those skilled in the art after having read the following detailed description of the preferred embodiment which is illustrated in the several figures of the drawing.

This invention will now be further illustrated with reference to the accompanying drawing in which:
FIG. 1(a)-(d) are cross-sections through a silicon substrate illustrating the manufacturing process of a reflective, deformable diffraction grating according to one embodiment of the invention;
FIG. 2 is an isometric, partially cut-away view of the diffraction grating, the manufacture of which is illustrated in FIG. 1.
FIG. 3 illustrates the operation of the grating of FIG. 2 in its "non-defracting" mode;
FIG. 4 and illustrates the operation of the grating of FIG. 3 in its "diffracting" mode;
FIG. 5 is a cross-section similar to that in FIG. 3, illustrating an alternative embodiment of the grating in its "non-defracting" mode;
FIG. 6 is a cross-section similar to that in FIG. 4, illustrating the grating in FIG. 8 in its "defracting" mode;
FIG. 7 is a pictoral view illustrating a further embodiment of the grating;
FIG. 8 is a cross-section along line 8-8 in FIG. 7;
FIG. 9 is a graphical representation of the modulation of a laser beam by the grating of the invention;
FIG. 10 is an illustration of how the diffraction grating of the invention can be combined with other gratings to form a complex modulator; and
FIG. 11 illustrates the operation of the grating in the modulation of colored light.

### DESCRIPTION OF PREFERRED EMBODIMENTS

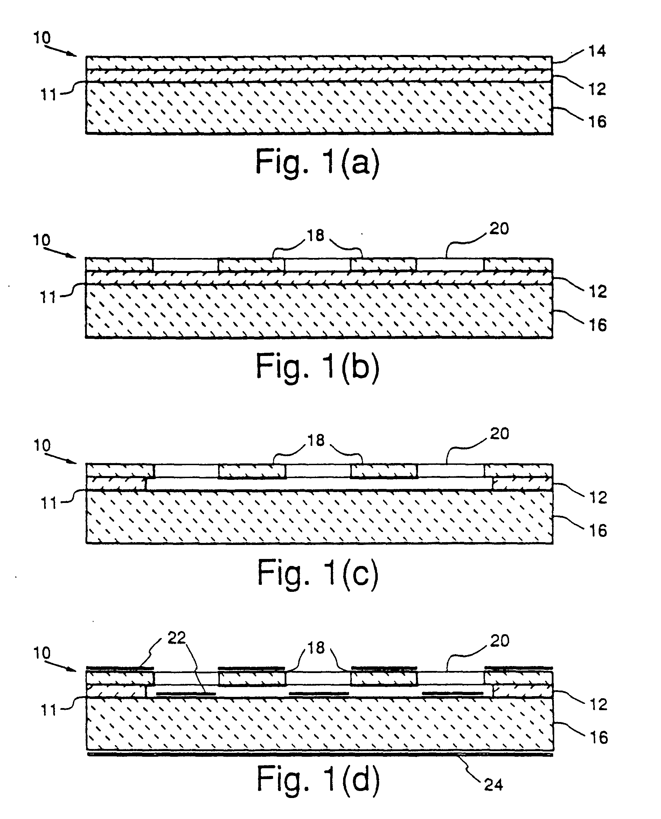

The fabrication steps required to produce a reflective deformable grating 10 according to this invention are illustrated in FIG. 1(a)-(d).

The first step, as illustrated in FIG. 1(a), is the deposition of an insulating layer 11 made of stoichemetric silicon nitride topped with a buffer layer of silicon dioxide followed by the deposition of a sacrificial silicon dioxide film 12 and a low-stress silicon nitride film 14, both 213 nm thick, on a silicon substrate 16. The low-stress silicon nitride film 14 is achieved by incorporating extra silicon (beyond the stoichiometric balance) into the film, during the deposition process. This reduces the tensile stress in the silicon nitride film to roughly 200 MPa.

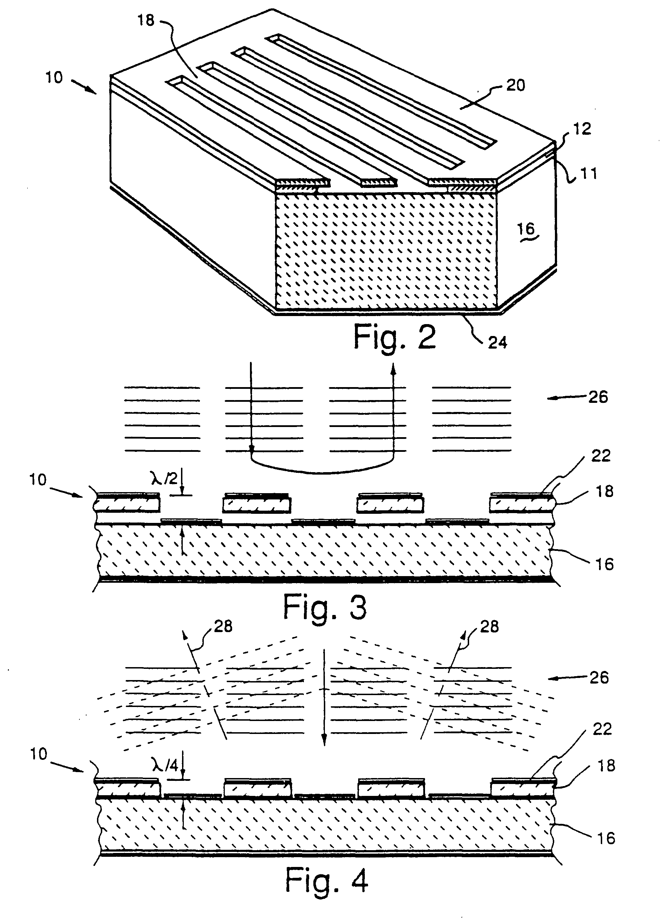

In the second step, which is illustrated in FIG. 1(b), the silicon nitride film 14 is lithographically patterned into a grating grid in the form of elongate elements 18. In an individual grating, all the elements are of the same dimension and are arranged parallel to one another with the spacing between adjacent elements equal to the element width. Depending on the design of the grating, however, the elements could typically be 1, 1.5 or 2*µ*m wide with a length that ranges from 10*µ*m to 120*µ*m. After this lithographic patterning process a peripheral silicon nitride frame 20 remains around the entire perimeter of the upper surface of the silicon substrate 16. This frame 20 is further illustrated in FIG. 2 and will be more fully described below with reference to that figure.

After the patterning process of the second step, the sacrificial silicon dioxide film 12 is etched in hydrofluoric acid, resulting in the configuration illustrated in FIG. 1(c). It can be seen that each element 18 now forms a free standing silicon nitride bridge, 213 nm thick, which is suspended a distance of 213nm (this being the thickness of the etched away sacrificial film 12) clear of the silicon substrate. As can further be seen from this figure the silicon dioxide film 12 is not entirely etched away below the frame 20 and so the frame 20 is supported, a distance of 213 nm, above the silicon substrate 16 by this remaining portion of the silicon dioxide film 12. The elements 18 are stretched within the frame and kept straight by the tensile stress imparted to the silicon nitride film 14 during the deposition of that film.

The last fabrication step, illustrated in FIG. 1(d), is sputtering, through a stencil mask, of a 50 nm thick aluminum film 22 to enhance the reflectance of both the elements 18 and the substrate 16 and to provide a first electrode for applying a voltage between the elements and the substrate. A second electrode is formed by sputtering an aluminum film 24, of similar thickness, onto the base of the silicon substrate 16.

The final configuration of the grating is illustrated in FIG. 2. Here it can be seen that the elements 18 together with the frame 20 define a grating which, as will be later explained, can be used for modulating a light beam. Furthermore, and as can be gathered from the above described manufacturing process, the frame 20 is formed integrally with the elements 18 and thus provides a relatively rigid supporting structure which maintains the tensile stress within the elements 18. In so doing, and as the frame 20 is supported by the remainder of the silicon dioxide film 12 that was not etched away, the elements are kept straight and a distance of 213 nm above the surface of the silicon substrate 16.

The operation of the deformable grating 10, formed by the above process, is illustrated with reference to FIG. 3 and 4. Before commencing the description of how the grating operates, however, it should be recalled that, in this case, each of the elements 18 are 213 nm thick and are suspended a distance of 213 nm clear of the substrate 16. This means that the distance from the top of each element to the top of the substrate is 426 nm. Similarly, the distance between the top of the reflective surface on the elements to the top of the reflective surface on the substrate is also 426 nm. This distance is known as the grating amplitude.

In FIG. 3 the grating 10 is shown with no voltage applied between the substrate 16 and the individual elements 18, and with a lightwave, generally indicated as 26, of a wavelength λ = 852 nm incident upon it. The grating amplitude of 426 nm is therefore equal to half of the wavelength of the incident light and, therefore, the total path length difference for the light reflected from the elements and from the substrate equals the wavelength of the incident light. As a result, light reflected from the elements and from the substrate add in phase and the grating 10 acts to reflect the light as a flat mirror.

However, as illustrated in FIG. 4, when a voltage is applied between the elements 18 and the substrate 16 the electrostatic forces pull the elements 18 down onto the substrate 16, with the result that the distance between the top of the elements and the top of the substrate is now 213 nm. As this is one quarter of the wavelength of the incident lights, the total path length difference for the light reflected from the elements and from the substrate is now one half of the wavelength (426 nm) of the incident light and the reflections interfere destructively, causing the light to be diffracted, indicated as 28.

Thus, if this grating is used in combination with a system, for detecting the reflected light, which has a numerical aperture sized to detect one order of diffracted light from the grating e.g., the zero order, this grating can be used to modulate the reflected light with high contrast.

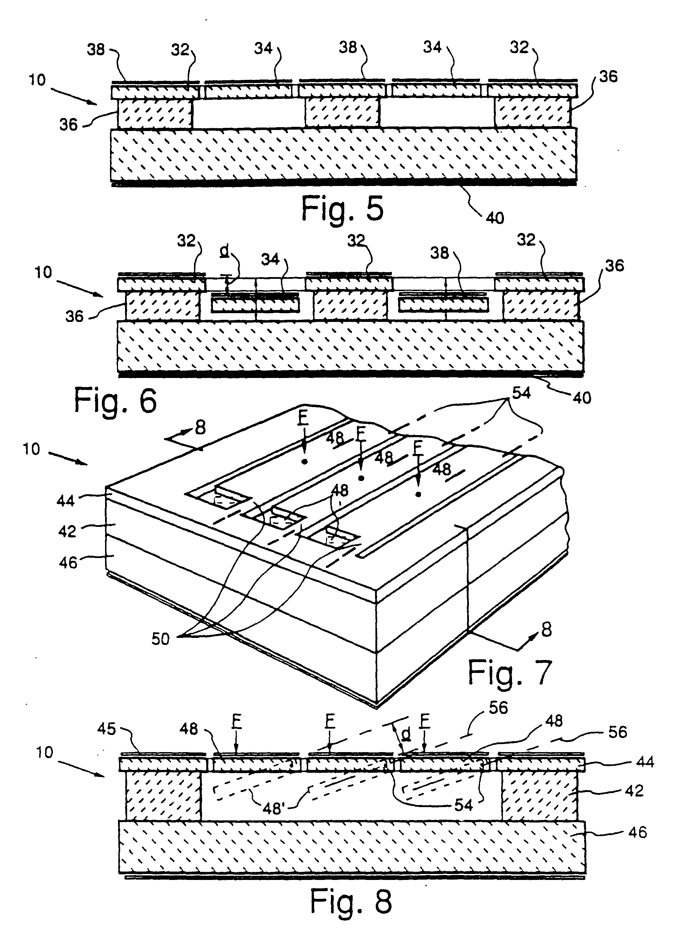

In FIGS. 5 and 6 an alternative embodiment of the diffraction grating 30 of the invention is illustrated. In this embodiment the grating 30 consists of a plurality of equally spaced, equally sized, fixed elements 32 and a plurality of equally spaced, equally sized, movable elements 34 in which the movable elements 34 lie in the spaces between the fixed elements 32. Each fixed element 32 is supported on and held in position by a body of supporting material 36 which runs the entire length of the fixed element 32. The bodies of material 36 are formed during a lithographic etching process in which the material between the bodies 36 is removed.

As can be seen from FIG. 5 the fixed elements 32 are arranged to be coplanar with the movable elements 34 and present a flat upper surface which is coated with a reflective layer 38. As such the grating 30 acts as a flat mirror when it reflects incident light, however, when a voltage is applied between the elements and an electrode 40 at the base of the grating 30 the movable elements 34 move downwards as is illustrated in FIG. 6. By applying different voltages the resultant forces on the elements 34 and, therefore, the amount of deflection of the movable elements 34 can be varied. Accordingly, when the grating amplitude (defined as the perpendicular distance d between the reflective layers 38 on adjacent elements) is m/4 times the wavelength of the light incident on the grating 30, the grating 30 will act as a plane mirror when m = 0, 2, 4... (i.e. an even number or zero) and as a reflecting diffraction grating when m = 1, 3, 5... (i.e. an odd number). In this manner the grating 30 can operate to modulate incident light in the same manner as the grating 10 illustrated in FIGS. 1 to 4.

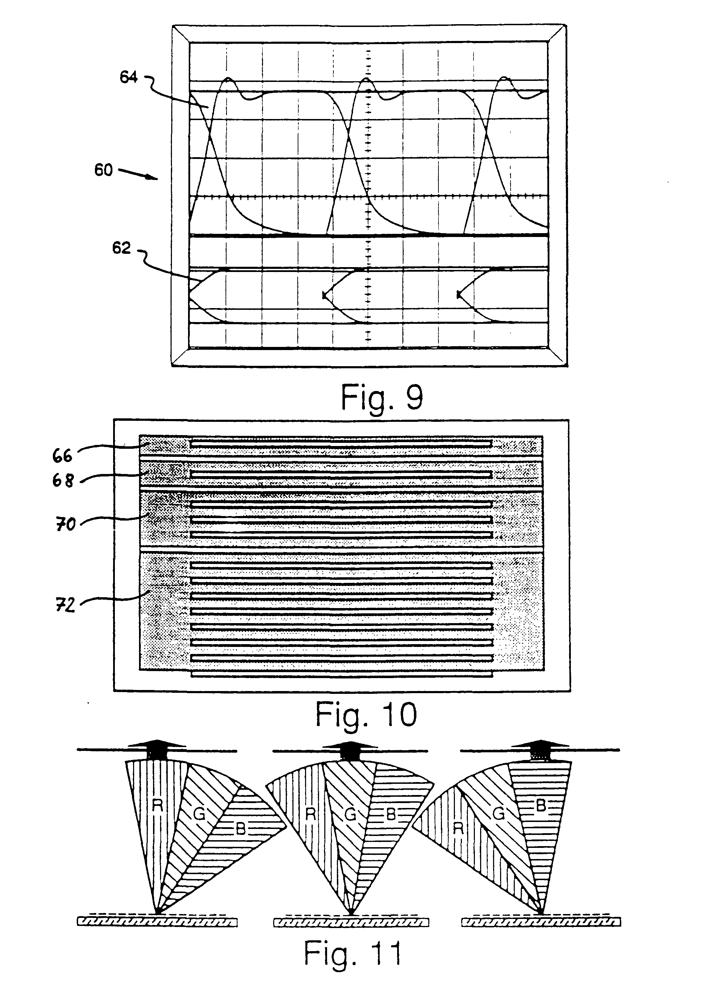

Yet another embodiment of the diffraction grating of the invention is illustrated in FIGS. 7 and 8. As with the grating 10 in FIGS. 1 to 4 this grating 41 consists of a sacrificial silicon dioxide film 42, a silicon nitride film 44 and a substrate 46. In this embodiment, however, the substrate 46 has no reflective layer formed thereon and only the silicon nitride film 44 has a reflective coating 45 formed thereon. As is illustrated in FIG. 7 the deformable elements 48 are coplanar in their undeformed state and lie close to one another so that together they provide a substantially flat reflective surface. The elements 48 are, however, formed with a neck 50 at either end, which is off-center of the longitudinal center line of each of the elements 48.

When a uniformly distributed force, as a result of an applied voltage for example, is applied to the elements 48 the resultant force F, for each element 48, will act at the geometric center 52 of that element. As each resultant force F is off-set from the axis of rotation 54 (which coincides with the centerline of each neck 50), a moment of rotation or torque is applied to each element 48 which results in a rotation of each element 48 about its axis 54 to the position 48' indicated in broken lines. This is known as "blazing" a diffraction grating.

As can be seen from FIG. 8, the reflective planes 56 of the elements 48 remain parallel to each other even in this "blazed" configuration and therefore, the grating amplitude d is the perpendicular distance between the reflective surfaces of adjacent elements. This "blazed" grating will operate to diffract light in the same manner as a sawtooth grating.

Although not illustrated in any of FIGS. 1 to 8, it will be apparent that a deformable diffraction grating can be constructed in which, in its undeformed state, all the reflective elements are in the form of movable elements arranged parallel, adjacent and coplanar with each other. In this type of grating not only the grating amplitude (i.e., the perpendicular distance between adjacent reflective surfaces) can be varied but also the average height of all the reflective surfaces can be changed by moving all the elements relative to a fixed datum. This arrangement has the advantage that both the amplitude and the phase of the reflected/diffracted light can be modulated.

The electrical, optical and mechanical characteristics of a number of modulators, similar in design to the modulator illustrated with reference to FIGS. 1 to 4 but of different dimensions were investigated by using a Helium Neon laser (of 633 nm wavelength) focused to a spot size of 36*µ*m on the center portion of each modulator. This spot size is small enough so that the curvature of the elements in the region where the modulator was illuminated can be neglected, but is large enough to allow the optical wave to be regarded as a plane wave and covering enough grating periods to give good separation between the zero and first order diffraction modes resulting from the operation of the grating. It was discovered that grating periods of (i.e.) the distance between the centerlines of two adjacent elements in the grating, 2,3 and 4 *µ*m and a wavelength of 633 nm resulted in first order diffraction angles of 18°, 14° and 9° respectively.

One of these first order diffracted light beams was produced by using a 120 *µ*m-long grating modulator with 1.5 *µ*m-wide elements at atmospheric pressure together with a HeNe light beam modulated at a bit rate of 500 kHz. detected by a low-noise photoreceiver and viewed on an oscilloscope. The resulting display screen 30 of the oscilloscope is illustrated in FIG. 9.

However, before proceeding with a discussion of the features illustrated in this figure, the resonant frequency of the grating elements should first be considered.

The resonant frequency of the mechanical structure of the grating of the invention was measured by driving the deformable grating modulator with a step function and observing the ringing frequency. The area of the aluminum on the deformable grating modulator is roughly 0.2 cm², which corresponds to an RC limited 3-dB bandwidth of 1 MHz with roughly 100 ohms of series resistance. This large RC time constant slowed down the step function, however, enough power existed at the resonant frequency to excite vibrations, even in the shorter elements. Although the ringing could be observed in normal atmosphere, the Q-factor was too low (approximately 1.5) for accurate measurements, so the measurements were made at a pressure of 150 mbar. At this pressure, the Q-factor rose to 8.6, demonstrating that air resistance is the major damping mechanism, for a grating of this nature, in a normal atmosphere.

Nonetheless, it was found that due to the high tensile stress in the elements, tension is the dominant restoring force, and the elements could therefore be modeled as vibrating strings. When this was done and the measured and theoretically predicted resonance frequencies compared, it was found that the theory is in good agreement with the experimental values, particularly when considering the uncertainty in tensile stress and density of the elements. As it is known that the bandwidth of forced vibrations of a mechanical structure is simply related to the resonance frequency and Q-factor, a Q-factor of 1.5 yields a 1.5 dB bandwidth of the deformable grating modulator 1.4 times larger than the resonance frequency. The range of bandwidths for these gratings is therefore from 1.8 MHz for the deformable grating modulator with 120 *µ*m elements to 6.1 MHz for the deformable grating modulator with 40 *µ*m elements.

Returning now to FIG. 9, it should be noted that with an applied voltage swing of 3 V, a contrast of 16dB for the 120 *µ*m-long bridges could be observed. Here the term "modulation depth" is taken to mean the ratio of the change in optical intensity to peak intensity.

The input (lower trace 62) on the screen 60 represents a pseudo-random bit stream switching between 0 and -2.7 V across a set of grating devices on a 1 cm by 1 cm die. The observed switching transient with an initial fast part followed by a RC dominated part,< is caused by the series resistance of the deformable grating modulator, which is comparable to a 50 ohm source resistance.

The output (upper trace 64) on the screen corresponds to the optical output of a low-noise photoreceiver detecting the first diffraction order of the grating used. The output (upper trace 64) from the deformable grating is high when the elements are relaxed and low when the elements are deflected. Ringing is observed only after the rising transient, because of the quadratic dependence of the electro-static force on the voltage (during switching from a voltage of -2.7 V to 0 V, the initial, faster part of the charging of the capacitor corresponds to a larger change in electro-static force, than when switching the opposite way). This ringing in the received signal indicates a decay close to critical damping.

Furthermore, it was found that because the capacitance increases as the elements are pulled toward the substrate, the voltage needed for a certain deflection is not a monotonically increasing function of this deflection. At a certain applied voltage condition, an incremental increase in the applied voltage causes the elements to be pulled spontaneously to the substrate (to latch) and this voltage is known as the "switching voltage" of the modulator. The switching voltage was found to be 3.2 V for gratings with 120 *µ*m long elements and, if it is assumed that tension dominates the restoring forces, the switching voltage is inversely proportional to the element length and therefore, the predicted switching voltage for 40 *µ*m long elements will be 9.6 V.

The importance of the switching voltage is that below this voltage, the deformable grating modulator can be operated in an analog fashion, however, if a voltage greater than the switching voltage is applied to the modulator it acts in a digital manner. Nonetheless, it is important to note that operating the modulator to the point of contact is desirable from an applications point of view, because as discussed above when the elements are deflected electrostatically, an instability exists once the beam deflection goes beyond the halfway point. This results in hysteretic behavior which will "latch" the beam in the down position. This latching feature gives the modulator the advantages of an active matrix design without the need for active components. A further advantage of this latching feature is that once the beam has "latched" it requires only a very small "holding voltage", much smaller than the original applied voltage, to keep the beam in its latched configuration. This feature is particularly valuable in low power applications where efficient use of available power is very important.

Finally, it was discovered that when the elements of the modulators are brought into contact with the substrate they could stick. This can be solved by adding small ridges below the elements to reduce the contact area between the elements and the substrate and thereby reduce the sticking problem.

The use of the modulator of this invention in displays requires high yield integration of individual modulator devices into 2-D arrays such as that illustrated in FIG. 10 which shows a plurality of grating modulators which can be used to provide a gray-scale operation. Each of the individual modulators 66, 68, 70, 72 consist of a number of elements and gray-scale can be obtained by addressing each modulator in a binary-weighted manner. The hysteresis characteristic for latching (as described above) can be used to provide gray-scale variation without analog control of the voltage supplied to individual grating modulator elements.

In FIG. 11 the use of the grating, in combination with other gratings, for modulating white light to produce colored light is illustrated. This approach takes advantage of the ability of a grating to separate a light spectrum into its consistent colors. By constructing separate red, green and blue modulation elements each with a grating designed to diffract the appropriate color into an optical system, a color display which is white light illuminated can be achieved. This approach is attractive for large area projection displays.

In summary, the reflective, deformable grating light modulator of this invention is a device which exhibits high resolution (40 by 40 *µ*m² to 100 *µ*m²); high response times/large bandwidth (2 to 6 MHz); high contrast ratio (close to 100% modulation with a 3V switching voltage) ; is polarization independent and easy to use. This device also has tolerance for high optical power, has good optical throughput, is simple to manufacture, CMOS compatible, and has application in a wide range of fields including use as an SLM and with fiber optic technology.

## Claims

1. A modulator for modulating an incident beam of light, the modulator comprising:
- a plurality of equally spaced apart elongated elements (18; 32, 34), each including a light reflective planar surface (22; 38), the elements (18; 32, 34) being arranged in a grating pattern (10) parallel to each other and with the light reflective surfaces (22; 38) of the elements lying in one or more parallel planes;
- means (20; 36) for supporting the elements in relation to one another; and
- means for moving a predetermined first set of elements (18; 34) relative to a predetermined second set of the elements (32) between a first modulator configuration wherein said first and second sets act to reflect the incident beam of light (26) as a plane mirror, and a second modulator configuration wherein said first and second sets diffract the incident beam of light (26) as it is reflected from the surfaces of the elements (18; 32, 34).

2. The modulator according to claim 1, wherein the reflective surfaces of adjacent elements (18; 32, 34) lie within planes separated by a distance equal to m/4 times a particular wavelength of the incident beam of light, wherein m = an even whole number or zero when the elements (18; 32, 34) are in the first configuration and m = an odd whole number when the elements (18; 32, 34) are in the second configuration.

3. The modulator according to claim 1 or 2, wherein said means for moving the elements operates to displace the first set of elements (18; 34) in a direction normal to said planes.

4. The modulator according to claim 3, wherein alternate elements (32, 34) are fixed relative to the supporting means (36).

5. The modulator according to claim 1, wherein the means for moving the first set of elements (18; 34) comprises means for applying an electrostatic force to the first set of elements (18; 34).

6. The modulator according to claim 5, wherein the reflective surfaces are formed by metallic layers (22; 38) deposited on the upper surfaces of said elements (18; 32, 34).

7. The modulator according to claim 6, wherein the means for applying electrostatic force includes a voltage supply coupled to the metallic layers (22; 38).

8. The modulator according to claim 2, wherein the reflective surfaces of the plurality of elements (18; 32, 34) are equal in dimensions and substantially rectangular in plan view.

9. The modulator according to claim 3, wherein the elements (18; 32, 34) are deformable and resilient.

10. The modulator according to any of the preceding claims, wherein the spacing between each of the elements (18; 32, 34) is substantially equal to the transverse width of each of the elements.

11. The modulator according to claim 10, wherein the spacing between the planar reflective surfaces of said first set of elements and the planar reflective surfaces of said second set of elements of the unmoved grating is equal to one-half of a predetermined wavelength of the beam of incident light.

12. The modulator according to any of the preceding claims, wherein the means for moving the first set of elements (34) comprises means for applying an electrostatic force between the first (34) and second (32) set of elongated elements.

13. The modulator according to claim 12, wherein the thickness of each element is equal to one-half the spacing between the reflective surfaces of the first (18; 34) and second (32) set of elongated elements.

14. The modulator according to any of claims 1 - 13, wherein all elongated elements (32, 34) are arranged in one common plane when in said modulator configuration acting as a plane mirror.

15. The modulator according to any of the preceding claims, wherein said first set of elements (18; 34) has a hysteretic characteristic such that following application of a first electrostatic force thereto to move it into said second configuration, a second electrostatic force of lesser magnitude than that of said first electrostatic force can be used to hold said first set of elements (18; 34) in said second configuration.

16. The modulator according to claim 1, further comprising a third set of elements and a fourth set of elements.

17. The modulator according to claim 9 or claim 14, wherein an incident beam of light directed normal to said light reflective surfaces is reflected back along the incident beam path when said grating (10) is in one position corresponding to the first configuration and said incident beam of light is angularly diffracted relative to said incident beam path when said grating (10) is moved to another position corresponding to said second configuration.

18. The modulator according to any of the preceding claims, further comprising ridges below the elements for reducing the contact area between the elements (18; 32, 34) and the substrate (16; 36) for preventing sticking.

19. The modulator according to claim 18, wherein the elements are equally sized and equally spaced apart parallel rectangular elements (18; 32, 34) having an underside and wherein said ridges are positioned between the underside of the elements (18; 32, 34) and the substrate (16; 36).

20. A light modulating device including an array of individual light modulators for modulating an incident beam of light to generate an image, each pixel of which has a chromatic and/or luminous characteristic corresponding to a physical characteristic of a corresponding modulator in the array, wherein at least one modulator comprises a modulator according to any of the preceding claims.

21. The device according to claim 20, wherein at least three modulation components are provided which each comprise a modulator according to any of claims 1 through 19, each said modulation component being designed to diffract a different color into an optical system when illuminated with a beam of white light.

22. A method of modulating a beam of light, the method comprising:
- causing the beam to impinge upon a plurality of equally spaced apart elements (18; 32, 34), each including an elongated, light reflective planar surface, the elements (18; 32, 34) being arranged in a grating pattern parallel to each other and with the light reflective surfaces of the elements (18; 32, 34) being parallel to each other; and
- moving a predetermined first set of the elements (18; 34) relative to a predetermined second set (32) of the elements between a first modulator configuration wherein the incident beam of light is reflected as by a plane mirror, and a second modulator configuration wherein the incident beam of light is diffracted as it is reflected from the elements (18; 32, 34).

23. The method according to claim 22, wherein the second configuration the said some of the elements (18; 34) are moved to positions wherein the spacing between the planes of the reflective surfaces of adjacent elements is equal to m/4 times a particular wavelength of the incident beam of light, wherein m = an even whole number or zero when the elements are in the first configuration and m = an odd whole number when the elements (18; 32, 34) are in the second configuration.

24. The method according to claim 23, wherein the thickness of each element (18; 32, 34) is equal to one-half the spacing between the planes of the adjacent reflective surfaces when in said first configuration.

25. The method according to claim 24, wherein the said some of the elements (18; 32) are caused to move relative to the other elements (34) by applying electrostatic forces to said some of the elements.

26. A modulator for modulating an incident beam of light, the modulator (10) comprising a plurality of elements arranged to act in concert to modulate the rays by means of diffraction, said modulator including:
- a plurality of equally spaced apart elongated elements (48, 48') each including a light reflective planar surface, the elements (48, 48') being arranged parallel to each other and with the light reflective surface of the elongated elements (48, 48') being parallel to each other;
- means (50) for supporting the elongated elements (48, 48') in relation to one another; and
- means (50) for moving the elongated elements (48, 48') relative to one another between a first modulator configuration (48) wherein the modulator acts to reflect the incident rays of light as plane mirror, and a second modulator configuration (48') wherein the elongated elements (48') are arranged in a grating pattern for diffracting the incident rays of light as they are reflected therefrom.

27. The modulator according to claim 26, wherein the light reflective surfaces of the elongated elements (48, 48') are parallel to each other in both the first and the second configuration.

28. The modulator according to claim 27, wherein the perpendicular spacing (d) between the reflective surfaces of adjacent elongated elements (48, 48') is equal to m/4 times a predetermined wavelength of the incident rays of light, wherein m = an even whole number or zero when the elongated elements (48, 48') are in the first configuration and m = an odd number when the elongated elements (48, 48') are in the second configuration.

29. The modulator according to claim 28, wherein the means (50) for moving the elongated elements (48, 48') operates to rotate the elongated elements (48, 48') when moving them relative to one another.

30. A modulator as recited in claim 29, wherein alternate elongated elements (48, 48') are fixed relative to the support means.

## Patentansprüche

1. Modulator zum Modulieren eines einfallenden Lichtstrahles, wobei der Modulator folgendes umfaßt:
- eine Mehrzahl von gleichmäßig voneinander beabstandeten langgestreckten Elementen (18; 32, 34), von denen jedes eine lichtreflektierende ebene Oberfläche (22; 38) aufweist, wobei die Elemente (18; 32, 34) in einem Gittermuster (10) parallel zueinander angeordnet sind, wobei die lichtreflektierenden Oberflächen (22; 38) der Elemente in einer oder mehreren parallelen Ebenen liegen;
- ein Mittel (20; 36) zum Halten der Elemente in bezug zueinander, und
- ein Mittel zum Bewegen einer vorbestimmten ersten Folge von Elementen (18; 34) in bezug auf eine vorbestimmte zweite Folge von Elementen (32) zwischen einer ersten Modulatorkonfiguration, bei der die ersten und zweiten Folgen eine Reflexion des einfallenden Lichtstrahles (26) wie an einem ebenen Spiegel bewirken, und zwischen einer zweiten Modulatorkonfiguration, bei der die ersten und zweiten Folgen den einfallenden Lichtstrahl (26) diffraktieren, so wie er von den Oberflächen der Elemente (18; 32, 34) reflektiert würde.

2. Modulator nach Anspruch 1, bei dem die reflektierenden Oberflächen der benachbarten Elemente (18; 32, 34) in Ebenen liegen, die um einen Abstand beabstandet sind, der gleich dem m/4-fachen einer bestimmten Wellenlänge des einfallenden Lichtstrahles ist, wobei m = eine gerade ganze Zahl oder Null ist, wenn die Elemente (18; 32, 34) in der ersten Konfiguration sind, und m = eine ungerade ganze Zahl sind, wenn die Elemente (18; 32, 34) in der zweiten Konfiguration sind.

3. Modulator nach Anspruch 1 oder 2, bei dem das Mittel zum Bewegen der Elemente ein Verschieben der ersten Folge von Elementen (18; 34) in einer zu den Ebenen senkrechten Richtung ist.

4. Modulator nach Anspruch 3, bei dem abwechselnd Elemente (32, 34) in bezug auf das Haltemittel (36) festgelegt sind.

5. Modulator nach Anspruch 1, bei dem das Mittel zum Bewegen der ersten Folge von Elementen (18; 34) ein Mittel zum Anlegen einer elektrostatischen Kraft an die erste Folge von Elementen (18; 34) umfaßt.

6. Modulator nach Anspruch 5, bei dem die reflektierenden Oberflächen durch metallische Schichten (22; 38) gebildet sind, die auf den oberen Oberflächen der Elemente (18; 32, 34) aufgebracht sind.

7. Modulator nach Anspruch 6, bei dem das Mittel zum Anlegen einer elektrostatischen Kraft eine Spannungsversorgung umfaßt, die mit den metallischen Schichten (22; 38) gekoppelt ist.

8. Modulator nach Anspruch 2, bei dem die reflektierenden Oberflächen der Mehrzahl von Elementen (18; 32, 34) in den Abmessungen gleich und im wesentlichen rechteckförmig in der ebenen Ansicht sind.

9. Modulator nach Anspruch 3, bei dem die Elemente (18; 32, 34) deformierbar und nachgiebig sind.

10. Modulator nach irgendeinem der vorhergehenden Ansprüche, bei dem der Abstand zwischen jedem der Elemente (18; 32, 34) im wesentlichen gleich der Querbreite von jedem der Elemente ist.

11. Modulator nach Anspruch 10, bei dem der Abstand zwischen der ersten ebenen reflektierenden Oberfläche der ersten Folge von Elementen und den ebenen reflektierenden Oberflächen der zweiten Folge von Elementen des nicht bewegten Gitters gleich einer halben vorbestimmten Wellenlänge des Strahls von einfallendem Licht ist.

12. Modulator nach irgendeinem der vorhergehenden Ansprüche, bei dem das Mittel zum Bewegen der ersten Folge von Elementen (34) ein Mittel zum Anlegen einer elektrostatischen Kraft zwischen der ersten (34) und der zweiten (32) Folge von langgestreckten Elementen ist.

13. Modulator nach Anspruch 12, bei dem die Dicke jedes Elementes gleich dem halben Abstand zwischen den reflektierenden Oberflächen der ersten (18; 34) und der zweiten (32) Folge von langgestreckten Elementen ist.

14. Modulator nach irgendeinem der Ansprüche 1 bis 13, bei dem alle langgestreckten Elemente (32, 34) in einer gemeinsamen Ebene angeordnet sind, wenn sie in der Modulatorkonfiguration als ein ebener Spiegel wirken.

15. Modulator nach irgendeinem der vorhergehenden Ansprüche, bei dem die erste Folge von Elementen (18; 34) eine Hysterese-Charakteristik der Art hat, daß nach dem Anlegen einer ersten elektrostatischen Kraft zur Bewegung in eine zweite Konfiguration eine zweite elektrostatische Kraft einer geringeren Größe als diejenige der ersten elektrostatischen Kraft verwendet werden kann, um die erste Folge von Elementen (18; 34) in der zweiten Konfiguration zu halten.

16. Modulator nach Anspruch 1, der ferner eine dritte Folge von Elementen und eine vierte Folge von Elementen umfaßt.

17. Modulator nach Anspruch 9 oder Anspruch 14, bei dem ein einfallender Lichtstrahl, der senkrecht zu den lichtreflektierenden Oberflächen gerichtet ist, entlang des Weges des einfallenden Lichtes zurückreflektiert wird, wenn sich das Gitter (10) in einer Position befindet, die der ersten Konfiguration entspricht, und der einfallende Lichtstrahl winkelmäßig in bezug auf den Weg des einfallenden Lichtes diffraktiert wird, wenn das Gitter (10) in eine andere Position, die der zweiten Konfiguration entspricht, bewegt wird.

18. Modulator nach irgendeinem der vorhergehenden Ansprüche, der ferner Rippen unterhalb der Elemente umfaßt, um die Kontaktfläche zwischen den Elementen (18; 32, 34) und dem Substrat (16; 36) zu verringern, um ein Anhaften zu verhindern.

19. Modulator nach Anspruch 18, bei dem die Elemente rechteckförmige Elemente (18; 32, 34) von gleicher Größe mit gleichmäßigem Abstand zueinander sind, die eine Unterseite besitzen, und wobei die Rippen zwischen der Unterseite der Elemente (18; 32, 34) und dem Substrat (16; 36) angeordnet sind.

20. Lichtmodulierende Vorrichtung mit einem Array von einzelnen Lichtmodulatoren zur Modulierung eines einfallenden Lichtstrahles zur Erzeugung eines Bildes, bei dem jedes Pixel eine Farb- und/oder Helligkeitscharakteristik gemäß einer physikalischen Charakteristik eines entsprechenden Modulators in dem Array hat, wobei wenigstens ein Modulator einen Modulator gemäß irgendeinem der vorhergehenden Ansprüche aufweist.

21. Vorrichtung nach Anspruch 20, bei der wenigstens drei Modulationskomponenten vorgesehen sind, von denen jede einen Modulator gemäß irgendeinem der Ansprüche 1 bis 19 aufweist, wobei jede Modulationskomponente dazu ausgebildet ist, bei Beleuchten mit einem Strahl von weißem Licht eine unterschiedliche Farbe in ein optisches System zu diffraktieren.

22. Verfahren zum Modulieren eines Lichtstrahles, umfassend:
- Veranlassen des Lichtstrahles, auf eine Mehrzahl von gleichmäßig voneinander beabstandeten Elementen (18; 32, 34) aufzutreffen, von denen jedes eine langgestreckte, lichtreflektierende Oberfläche aufweist, wobei die Elemente in einem Gittermuster parallel zueinander angeordnet sind, und wobei die lichtreflektierenden Oberflächen der Elemente (18; 32, 34) parallel zueinander sind, und
- Bewegen einer vorbestimmten ersten Folge der Elemente (18; 34) in bezug auf eine vorbestimmte zweite Folge (32) der Elemente zwischen einer ersten Modulatorkonfiguration, in der der einfallende Lichtstrahl wie von einem ebenen Spiegel reflektiert wird, und zwischen einer zweiten Modulatorkonfiguration, in der der einfallende Lichtstrahl wie von den Elementen (18; 32, 34) diffraktiert wird.

23. Verfahren nach Anspruch 22, bei dem die zweite Konfiguration der betreffenden Elemente (18; 34) in Positionen bewegt wird, in denen der Abstand zwischen den Ebenen der reflektierenden Oberflächen von benachbarten Elementen gleich dem m/4-fachen einer bestimmten Wellenlänge des einfallenden Lichtstrahles ist, wobei m = einer geraden ganzen Zahl oder Null ist, wenn die Elemente in der ersten Konfiguration sind, und m = einer ungeraden ganzen Zahl ist, wenn die Elemente (18; 32, 34) in der zweiten Konfiguration sind.

24. Verfahren nach Anspruch 23, bei dem die Dicke jedes Elementes (18; 32, 34) gleich der Hälfte des Abstandes zwischen den Ebenen von benachbarten reflektierenden Oberflächen in der ersten Konfiguration ist.

25. Verfahren nach Anspruch 24, bei dem die betreffenden Elemente (18; 32) veranlaßt werden, sich in bezug auf die anderen Elemente (34) durch Anlegen von elektrostatischen Kräften an einige der Elemente zu bewegen.

26. Modulator zum Modulieren eines einfallenden Lichtstrahles, wobei der Modulator (10) eine Mehrzahl von Elementen aufweist, die gemeinsam angeordnet sind, um die Lichtstrahlen durch Diffraktion zu modulieren, wobei der Modulator umfaßt:
- eine Mehrzahl von gleichmäßig voneinander beabstandeten langgestreckten Elementen (48, 48'), von denen jedes eine lichtreflektierende ebene Oberfläche aufweist, wobei die Elemente (48, 48') parallel zueinander angeordnet sind und sich die lichtreflektierenden Oberflächen der langgestreckten Elemente (48, 48') parallel zueinander befinden;
- ein Mittel (50) zur Aufnahme der langgestreckten Elemente (48, 48') in bezug zueinander, und
- ein Mittel (50) zum Bewegen der langgestreckten Elemente (48, 48') relativ zueinander zwischen einer ersten Modulatorkonfiguration (48), in der der Modulator zur Reflexion der einfallenden Lichtstrahlen wie ein ebener Spiegel dient, und zwischen einer zweiten Modulatorkonfiguration (48, 48'), in der die langgestreckten Elemente (48') in einem Gittermuster angeordnet sind, um die einfallenden Lichtstrahlen zu diffraktieren, als ob sie davon reflektiert würden.

27. Modulator nach Anspruch 26, bei dem die lichtreflektierenden Oberflächen von langgestreckten Elementen (48, 48') sowohl in der ersten als auch in der zweiten Konfiguration parallel zueinander sind.

28. Modulator nach Anspruch 27, bei dem der rechtwinklige Abstand (d) zwischen den reflektierenden Oberflächen von benachbarten langgestreckten Elementen (48, 48') gleich dem m/4-fachen einer vorbestimmten Wellenlänge der einfallenden Lichtstrahlen ist, wobei m = einer geraden ganzen Zahl oder Null ist, wenn sich die langgestreckten Elemente (48, 48') in der ersten Konfiguration befinden, und m = einer ungeraden Zahl ist, wenn sich die langgestreckten Elemente (48, 48') in der zweiten Konfiguration befinden.

29. Modulator nach Anspruch 28, bei dem das Mittel (50) zum Bewegen der langgestreckten Elemente (48, 48') eine Drehung der langgestreckten Elemente (48, 48') bewirkt, wenn diese relativ zueinander bewegt werden.

30. Modulator nach Anspruch 29, bei dem langgestreckte Elemente (48, 48') abwechselnd in bezug auf das Aufnahmemittel festgelegt sind.

## Revendications

1. Modulateur pour moduler un faisceau de lumière incident, le modulateur comprenant :
une pluralité d'éléments allongés à égale distance les uns des autres (18; 32, 34), comprenant chacun une surface plane réfléchissant la lumière (22 ; 38), les éléments (18 ; 32, 34) étant agencés selon un motif en grille (10) parallèlement les uns aux autres et avec les surfaces réfléchissant la lumière (22 ; 38) de l'élément situées dans un ou plusieurs plans parallèles ;
des moyens (20 ; 36) pour supporter les éléments en relation les uns avec les autres ; et
des moyens pour déplacer un premier ensemble prédéterminé d'éléments (18 ; 34) par rapport à un deuxième ensemble prédéterminé des éléments (32) entre une première configuration de modulateur dans laquelle lesdits premier et deuxième ensembles servent à réfléchir le faisceau de lumière incident (26) comme un miroir plan, et une seconde configuration de modulateur dans laquelle lesdits premier et deuxième ensembles diffractent le faisceau de lumière incident (26) lorsqu'il se réfléchit depuis les surfaces des éléments (18; 32, 34).

2. Modulateur selon la revendication 1, dans lequel les surfaces réfléchissantes des éléments adjacents (18; 32, 34) sont situées dans des plans séparés d'une distance égale à m/4 fois une longueur d'onde particulière du faisceau de lumière incident, dans lequel m = un nombre entier pair ou zéro lorsque les éléments (18 ; 32, 34) sont dans la première configuration, et m = un nombre entier impair lorsque les éléments (18; 32, 34) sont dans la seconde configuration.

3. Modulateur selon la revendication 1 ou 2, dans lequel lesdits moyens pour déplacer les éléments servent à déplacer le premier ensemble d'éléments (18 ; 34) dans une direction perpendiculaire auxdits plans.

4. Modulateur selon la revendication 3, dans lequel des éléments alternés (32, 34) sont fixés par rapport aux moyens de support (36).

5. Modulateur selon la revendication 1, dans lequel les moyens pour déplacer le premier ensemble d'éléments (18 ; 34) comprennent des moyens pour appliquer une force électrostatique au premier ensemble d'éléments (18 ; 34).

6. Modulateur selon la revendication 5, dans lequel les surfaces réfléchissantes sont formées par des couches métalliques (22 ; 38) déposées sur les surfaces supérieures desdits éléments (18 ; 32, 34).

7. Modulateur selon la revendication 6, dans lequel les moyens pour appliquer une force électrostatique comprennent une alimentation en tension couplée aux couches métalliques (22 ; 38).

8. Modulateur selon la revendication 2, dans lequel les surfaces réfléchissantes de la pluralité d'éléments (18; 32, 34) sont de dimensions égales et sensiblement rectangulaires sur une vue en plan.

9. Modulateur selon la revendication 3, dans lequel les éléments (18 ; 32, 34) sont déformables et élastiques.

10. Modulateur selon l'une quelconque des revendications précédentes, dans lequel l'espacement entre chacun des éléments (18; 32, 34) est sensiblement égal à la largeur transversale de chacun des éléments.

11. Modulateur selon la revendication 10, dans lequel l'espacement entre les surfaces réfléchissantes planes dudit premier ensemble d'éléments et les surfaces réfléchissantes planes dudit deuxième ensemble d'éléments de la grille non déplacée est égal à la moitié d'une longueur d'onde prédéterminée du faisceau de lumière incidente.

12. Modulateur selon l'une quelconque des revendications précédentes, dans lequel les moyens pour déplacer le premier ensemble d'éléments (34) comprennent des moyens pour appliquer une force électrostatique entre le premier (34) et le deuxième (32) ensemble d'éléments allongés.

13. Modulateur selon la revendication 12, dans lequei l'épaisseur de chaque élément est égale à la moitié de l'espacement entre les surfaces réfléchissantes du premier (18 ; 34) et du deuxième (32) ensemble d'éléments allongés.

14. Modulateur selon l'une quelconque des revendications 1 à 13, dans lequel tous les éléments allongés (32, 34) sont agencés sur un plan commun lorsqu'ils sont dans ladite configuration de modulateur faisant office de miroir plan.

15. Modulateur selon l'une quelconque des revendications précédentes, dans lequel ledit premier ensemble d'éléments (18 ; 34) possède une caractéristique d'hystérésis telle que, suite à l'application d'une première force électrostatique à celui-ci pour le mettre dans ladite seconde configuration, une seconde force électrostatique d'amplitude moindre que celle de ladite première force électrostatique peut être utilisée pour maintenir ledit premier ensemble d'éléments (18 ; 34) dans ladite seconde configuration.

16. Modulateur selon la revendication 1, comprenant en outre un troisième ensemble d'éléments et un quatrième ensemble d'éléments.

17. Modulateur selon la revendication 9 ou la revendication 14, dans lequel un faisceau de lumière incident dirigé perpendiculairement auxdites surfaces réfléchissant la lumière est réfléchi de nouveau le long de la trajectoire du faisceau incident lorsque ladite grille (10) se trouve dans une position correspondant à la première configuration et que ledit faisceau de lumière incident est diffracté angulairement par rapport à ladite trajectoire du faisceau incident lorsque ladite grille (10) est déplacée dans une autre position correspondant à ladite seconde configuration.

18. Modulateur selon l'une quelconque des revendications précédentes, comprenant en outre des crêtes en dessous des éléments pour réduire la surface de contact entre les éléments (18 ; 32, 34) et le substrat (16 ; 36) afin d'empêcher l'adhérence.

19. Modulateur selon la revendication 18, dans lequel les éléments sont de même dimension et sont des éléments rectangulaires parallèles à égale distance les uns des autres (18 ; 32, 34) ayant une face inférieure et dans lequel lesdites crêtes sont placées entre la face inférieure des éléments (18 ; 32, 34) et le substrat (16 ; 36).

20. Dispositif modulateur de lumière comprenant un réseau de modulateurs de lumière individuels pour moduler un faisceau de lumière incident pour générer une image dont chaque pixel possède une caractéristique chromatique et/ou lumineuse correspondant à une caractéristique physique d'un modulateur correspondant dans le réseau, dans lequel au moins un modulateur comprend un modulateur selon l'une quelconque des revendications précédentes.

21. Dispositif selon la revendication 20, dans lequel au moins trois composantes de modulation sont prévues, lesquelles comprennent chacune un modulateur selon l'une quelconque des revendications 1 à 19, chacune desdites composantes de modulation étant conçue pour diffracter une couleur différente dans un système optique lorsqu'il est éclairé avec un faisceau de lumière blanche.

22. Méthode de modulation d'un faisceau de lumière, la méthode comprenant les étapes consistant à :
amener le faisceau à venir heurter une pluralité d'éléments à égale distance les uns des autres (18 ; 32, 34), comprenant chacun une surface plane allongée réfléchissant la lumière, les éléments (18 ; 32, 34) étant agencés selon un motif en grille parallèlement les uns aux autres et les surfaces réfléchissant la lumière des éléments (18 ; 32, 34) étant parallèles les unes aux autres ;
déplacer un premier ensemble prédéterminé des éléments (18 ; 34) par rapport à un deuxième ensemble prédéterminé (32) des éléments entre une première configuration de modulateur dans laquelle le faisceau de lumière incident est réfléchi comme par un miroir plan, et une seconde configuration de modulateur dans laquelle le faisceau de lumière incident est diffracté lorsqu'il se réfléchit depuis les éléments (18 ; 32, 34).

23. Méthode selon la revendication 22, dans laquelle, dans la seconde configuration, certains desdits éléments (18 ; 34) sont déplacés dans des positions dans lesquelles l'espacement entre les plans des surfaces réfléchissantes d'éléments adjacents est égal à m/4 fois une longueur d'onde particulière du faisceau de lumière incident, dans laquelle m = un nombre entier pair ou zéro lorsque les éléments sont dans la première configuration et m = un nombre entier impair lorsque les éléments (18 ; 32, 34) sont dans la seconde configuration.

24. Méthode selon la revendication 23, dans laquelle l'épaisseur de chaque élément (18 ; 32, 34) est égale à la moitié de l'espacement entre les plans des surfaces réfléchissantes adjacentes lorsqu'ils sont dans ladite première configuration.

25. Méthode selon la revendication 24, dans laquelle certains desdits éléments (18 ; 32) sont amenés à se déplacer par rapport aux autres éléments (34) en appliquant des forces électrostatiques à certains desdits éléments.

26. Modulateur pour moduler un faisceau de lumière incident, le modulateur (10) comprenant une pluralité d'éléments agencés pour agir de concert pour moduler les rayons par diffraction, ledit modulateur comprenant :
une pluralité d'éléments allongés à égale distance les uns des autres (48, 48') comprenant chacun une surface plane réfléchissant la lumière, les éléments (48, 48') étant agencés parallèlement les uns aux autres et les surfaces réfléchissant la lumière des éléments allongés (48, 48') étant parallèles les unes aux autres ;
des moyens (50) pour supporter les éléments allongés (48, 48') en relation les uns avec les autres ; et
des moyens (50) pour déplacer les éléments allongés (48, 48') les uns par rapport aux autres entre une première configuration de modulateur (48) dans laquelle le modulateur sert à réfléchir les rayons de lumière incidents comme un miroir plan, et une seconde configuration de modulateur (48') dans laquelle les éléments allongés (48') sont agencés selon un motif en grille pour diffracter les rayons de lumière incidents lorsqu'ils se réfléchissent depuis ceux-ci.

27. Modulateur selon la revendication 26, dans lequel les surfaces réfléchissant la lumière des éléments allongés (48, 48') sont parallèles les unes aux autres à la fois dans la première et la seconde configuration.

28. Modulateur selon la revendication 27, dans lequel l'espacement perpendiculaire (d) entre les surfaces réfléchissantes des éléments allongés adjacents (48, 48') est égal à m/4 fois une longueur d'onde prédéterminée des rayons de lumière incidents, dans lequel m = un nombre entier pair ou zéro lorsque les éléments allongés (48, 48') sont dans la première configuration et m = un nombre impair lorsque les éléments allongés (48, 48') sont dans la seconde configuration.

29. Modulateur selon la revendication 28, dans lequel les moyens (50) pour déplacer les éléments allongés (48, 48') servent à faire tourner les éléments allongés (48, 48') en les déplaçant les uns par rapport aux autres.

30. Modulateur selon la revendication 29, dans lequel les éléments allongés alternés (48, 48') sont fixes par rapport aux moyens de support.
